(19) Europäisches Patentamt
European Patent Office
Office européen des brevets

(11) EP 2 669 727 A1

(12) EUROPEAN PATENT APPLICATION

(43) Date of publication:
04.12.2013 Bulletin 2013/49

(51) Int Cl.:
G02B 13/06 (2006.01)   G02B 17/08 (2006.01)

(21) Application number: 12177490.5

(22) Date of filing: 23.07.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.05.2012  KR 20120056828

(71) Applicant: Samsung Electro-Mechanics Co., Ltd
Suwon
Gyunggi-do 443-743 (KR)

(72) Inventors:
• Kim, Tae Young
Seoul 120-130 (KR)
• Song, In Taek
443-743 Gyunggi-do (KR)
• An, Bok Sun
443-743 Gyunggi-do (KR)

(74) Representative: Neumann, Ditmar
KNH Patentanwälte
Kahlhöfer Neumann Rößler Heine
Postfach 10 33 63
40024 Düsseldorf (DE)

(54) Wide-angle prism-lens

(57) Wide-angle optical system with reduced distortion including, from object- to image-side, a prism lens (1) having a first refractive surface (11), a first reflecting surface (12), a second reflecting surface (13) and a second reflecting surface (14).

**FIG. 2**

**Description**

CROSS REFERENCE TO RELATED APPLICATION

This application claims the benefit of Korean Patent Application No. 10-2012-0056828, filed on May 29, 2012, entitled "Wide Angle Optical System," which is hereby incorporated by reference in its entirety into this application.

BACKGROUND OF THE INVENTION

1. Technical Field

The present invention relates to a wide angle optical system.

2. Description of the Related Art

In recent industries such as motor vehicles, cameras are mounted at various positions in addition to a rear of a car so as to facilitate traveling and parking of a car and as a result, a driver can secure a rear view of a car through images photographed by the cameras.

A rear supervisory camera mounted in the car uses a wide angle optical system that images subjects with a wide angle so as to secure rear image information with a wider field of view using a small imaging system.

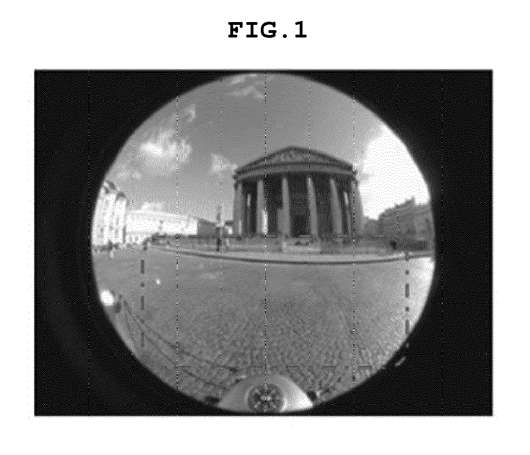

The rear supervisory camera for a car according to the prior art is generally fixed to a car by a bracket and an optical axis of the camera is fixed downward to a car. Generally, the rear supervisory camera for a camera mainly requires only an interested area represented by a dotted line in the image shown in FIG. 1 and therefore, needs to remove unnecessary portions or inclinedly dispose downwardly the camera to be mounted.

The field of view that can be photographed by a lens of the rear supervisory camera depends on an angle of the lens. Therefore, various attempts have been made to secure the wider field of view through the lens for the rear supervisory camera according to the prior art.

Generally, a fish-eye lens with a wide field of view has a strong wide angle but has a problem of roundly distorting things and thus, may have a limitation in providing a clear image.

In addition to this, a camera module (Patent Document 1: Rear watch camera module and camera system of car for obtaining angle of view) according to the prior art having a rear supervisory camera having a plurality of lens arrays disposed therein so as to secure the rear view has been known in advance.

The camera module of the foregoing Patent Document 1 includes a first lens array configured to include an objective lens on which images of the rear of the car are focused and a plurality of relay lenses and a second lens array and a third lens array each disposed at the left and right of the first lens array. Thereby, the camera module according to the prior art can simultaneously photograph the rear of the camera and the left and right of the rear by a single camera and thus, does not require a plurality of cameras. However, the camera module requires separate program jobs for collecting and synthesizing the image information photographed by the plurality of lens arrays as single image information and may have a limitation in realizing miniaturization and lightness by the plurality of lens arrays.

[Prior Art Document]

[Patent Document]

(Patent Document 1) Patent Document 1: Korean Patent No. 10-0786129

SUMMARY OF THE INVENTION

The present invention has been made in an effort to provide images of an interested area to a user with a wide field of view without being distorted.

According to a preferred embodiment of the present invention, there is provided a wide angle optical system, including: a prism lens formed to have optical surfaces having two refractive surfaces and two reflecting surfaces; and an image sensor disposed at a rear portion of the prism lens so as to synthesize images transferred from the prism lens.

The prism lens may have a first refractive surface, a first reflecting surface, a second reflecting surface, and a second refractive surface in order that rays are transmitted according to tracing of racing from an object side to be imaged.

The prism lens may include the first refractive surface, the first reflecting surface facing the first refractive index and disposed to be biased with respect to an optical axis thereof, the second reflecting surface facing the first reflecting surface and biased with respect to the optical axis after being reflected to the first reflective surface, and the second refractive surface adjacently disposed to the image sensor.

An angle incident to the first refractive surface may be inclined at 30° or more.

A refraction lens may be further disposed in front of the first refractive surface of the prism lens.

A refractive lens may be further disposed between the prism lens and the image sensor, in more detail, between the second refractive surface of the prism lens and the image sensor.

At least one optical surface of the prism lens may be formed in an anamorphic surface or a free curved surface.

The prism lens may have a field of view of 90° vertically and 120° horizontally and Fno may have a characteristic of 3.0.

An iris may be further disposed on the optical surface of the prism lens.

The iris may be disposed on the first reflecting surface or the second reflecting surface of the prism lens.

BRIEF DESCRIPTION OF THE DRAWINGS

The above and other objects, features and advantages of the present invention will be more clearly understood from the following detailed description taken in conjunction with the accompanying drawings, in which:

FIG. 1 is a diagram showing a rear image photographed by a general rear camera for a car;
FIG. 2 is a diagram showing an optical path of a prism lens of a wide angle optical system according to a preferred embodiment of the present invention;
FIG. 3 is a diagram showing an example of the wide angle optical system according to the preferred embodiment of the present invention; and
FIG. 4 is a diagram showing another example of the wide angle optical system according to the preferred embodiment of the present invention.

DESCRIPTION OF THE PREFERRED EMBODIMENT

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, preferred embodiments of the present invention will be described in detail with reference to the attached drawings.

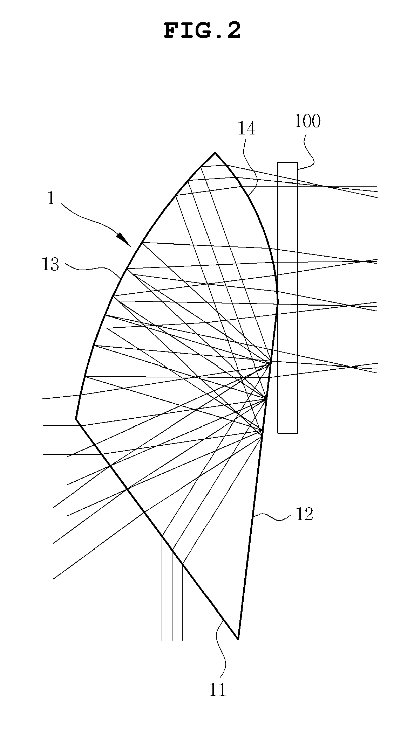

FIG. 2 is a diagram showing an optical path of a prism lens of a wide angle optical system according to a preferred embodiment of the present invention.

As shown in FIG. 2, the wide angle optical system according to the preferred embodiment of the present invention is configured to include a prism lens 1 capable of securing a field of view of an interested area, wherein the prism lens 1 includes four optical surfaces and each optical surface is not arranged in parallel with each other.

In particular, the prism lens 1 according to the preferred embodiment of the present invention includes two refractive surfaces 11 and 14 and two reflecting surfaces 12 and 13.

The prism lens 1 has a first refractive surface 11, a first reflecting surface 12, a second reflecting surface 13, and a second reflecting surface 14 in order that rays are transmitted according to tracing of rays from an object side to be imaged.

The wide angle optical system according to the preferred embodiment of the present invention is arranged so that the first refractive surface 11 of the prism lens 1 has a predetermined angle with respect to an axis of an image sensor 100 disposed at a rear portion of the prism lens 1. Here, the image sensor 100 serves to synthesize images transferred from the prism lens 1. In other words, the first refractive surface 11 is arranged to make the incident angle to be 30° or more so that the optical axis of the prism lens 1 forms a predetermined angle with respect to the axis of the image sensor 100 to focus a required area, in detail, only the interested area. In order words, the prism lens 1 inclinedly disposes the first refractive surface 11 downwardly so as to prevent images of unnecessary portions, that is, images out of the interested area among the images to be photographed from being incident to the image sensor 100.

Preferably, the wide angle optical system according to the preferred embodiment of the present invention forms an iris (not shown) in the prism lens 1, wherein the iris filters the images out of the interested area. As shown in FIG. 1, the wide angle optical system including the prism lens 1 according to the preferred embodiment of the present invention does not photograph the rear of a car and can photograph only the interested area partitioned by a dotted line.

Selectively, the iris is disposed on the first reflecting surface 12 or the second reflecting surface 13 of the prism lens 1.

As described above, the first refractive surface 11 is disposed at a predetermined angle to the axis of the image sensor 110 and is inclined downwardly so as to photograph the interested area. The first reflecting surface 12 faces the first refractive surface 11 and is biased so as not to coincide with the optical axis thereof. The second reflecting surface 13 also faces the first reflecting surface 12 and is arranged to be biased out of an optical axis after being reflected to the first reflecting surface 12. In addition, the second refractive surface 14 is adjacently disposed to the image sensor 100.

Further, in the prism lens 1 according to the preferred embodiment of the present invention, the first refractive surface 11, the first reflecting surface 12, the second reflecting surface 13, and the second refractive surface 14 may be made of plastic or glass, but is not limited thereto.

The prism lens 1 has a field of view of 100° or more and is manufactured to have an anamorphic surface with different curvatures on X and Y or a free curved surface. In detail, in the prism lens 1 is formed so that the anamorphic surface or the free curved surface is formed on at least one of four optical surfaces 11, 12, 13, and 14.

[Equation 1]

$$z(x) = \frac{cx^2}{1 + [1 - (1+k)c^2x^2]} + Ax^4 + Ax^6 + Ax^8 + Ax^{10} + \cdots$$

$$z(y) = \frac{cy^2}{1 + [1 - (1+k)c^2y^2]} + Ay^4 + Ay^6 + Ay^8 + Ay^{10} + \cdots$$

The prism lens 1 according to the preferred embodiment of the present invention may be defined from Equation (Equation 1) regarding the anamorphic surface.

z: a distance in an optical-axis direction from an apex of a lens to a lens surface, in x (or y) axis from an lens axis
C: a central curvature of a lens surface
x: a distance in an x-axis direction from an optical axis
k: conic constant
A: aspheric constant

[Equation 2]

$$z = \sum_{n=0}^{k} \sum_{m=0}^{n} C_{nm} x^m y^{n-m}$$

The prism lens 1 according to the preferred embodiment of the present invention may also be defined from Equation (Equation 2) regarding the free curved surface. (where z: a distance in an optical-axis direction from an apex of a lens to a lens surface, C: a curvature radius of a lens, and x, y: a distance in an x-axis or y-axis direction from an optical axis)

Example 1

The following Table 1 shows a design data value of the prism lens 1 according to Example 1 according to the preferred embodiment of the present invention.

[Table 1]

| Surface No. | Y: Curvature Radius (mm) | X: Curvature Radius (mm) | Thickness (mm) | Refractive Index (abbe constant) | Remarks |
|---|---|---|---|---|---|
| First Refractive Surface | -428.77713 | -20.87453 | 5.31544 | 1.53:56 | |
| First Reflecting Surface | 5119.6550 9 | 69.70785 | -5.976695 | 1.53:56 | ADE-35 |
| Second Reflecting Surface | 20.0694 | 23.4973 | 4.77378 | 1.53:56 | ADE 20 |
| Second Refractive Surface | -9.7070 | -7.0328 | 0.1576 | 1.516:64.1 | |

Here, ADE is a tilt angle in a YZ direction based on an X axis.

The prism lens 1 according to Example 1 has a field of view 90° vertically and 120° horizontally and Fno has a characteristic of 3.0. In particular, Example 1 used the prism lens 1 in which the iris is disposed on the first reflecting surface 12.

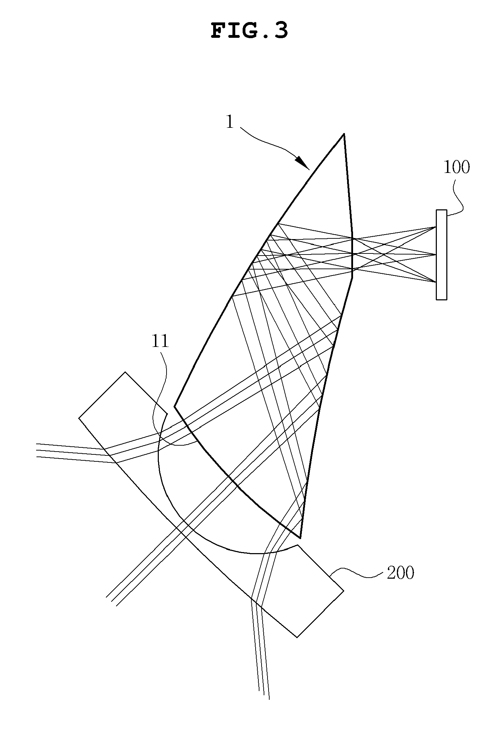

FIG. 3 is a diagram showing an example of the wide angle optical system according to the preferred embodiment of the present invention.

As shown, in an example of the wide angle optical system according to the preferred embodiment of the present invention, a refraction lens 200 may be arranged in front of the prism lens 1, in detail, the first refractive surface 11.

The refraction lens 200 reduces the image distortion of the interested area to form an image similar to the real image. Selectively, the refraction lens 200 may be an integrated reflective and refractive surface (IRR) lens.

The refraction lens 200 may serve to cover the prism lens 1.

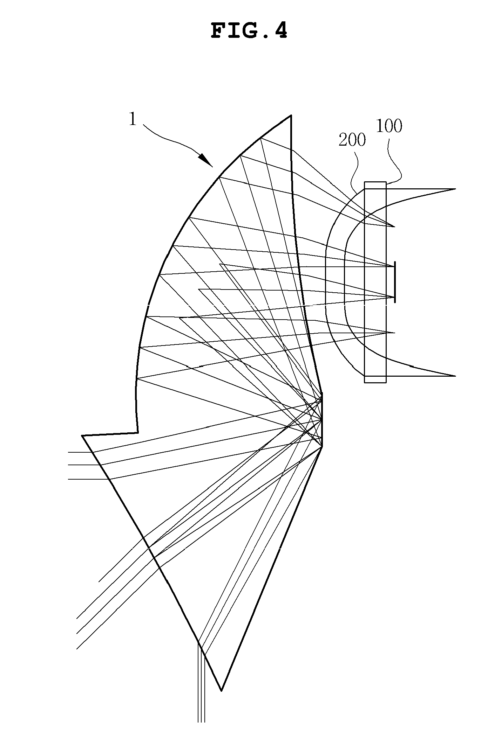

FIG. 4 is a diagram showing another example of the wide angle optical system according to the preferred embodiment of the present invention.

As shown, another example of the wide angle optical system according to the preferred embodiment of the present invention, the refraction lens 200 may be arranged between the prism lens 1 and the image lens 100.

According to the preferred embodiment of the present invention, the present invention can photograph only the interested area of the rear of a car with the wide field of view by using the prism lens.

The present invention can secure the wide field of view by the single prism lens, thereby making it possible to realize the miniaturization and lightness.

Further, the present invention can photograph only the interested area by the prism lens to structurally simplify the camera module without the separate image correction operation, thereby making it possible to lower manual labor and the manufacturing costs.

In addition, the present invention can be designed to certainly reduce the distortion.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

**Claims**

1. A wide angle optical system, comprising:

    a prism lens formed to have optical surfaces having two refractive surfaces and two reflecting surfaces; and
    an image sensor disposed at a rear portion of the prism lens so as to synthesize images transferred from the prism lens.

2. The wide angle optical system as set forth in claim 1, wherein the prism lens has a first refractive surface, a first reflecting surface, a second reflecting surface, and a second refractive surface in order that rays are transmitted according to tracing of racing from an object side to be imaged.

3. The wide angle optical system as set forth in claim 1, wherein the prism lens includes a first refractive surface, a first reflecting surface facing the first refractive surface and disposed to be biased with respect to an optical axis thereof, a second reflecting surface facing the first reflecting surface and biased with respect to the optical axis after being reflected to the first reflective surface, and a second refractive surface adjacently disposed to the image sensor.

4. The wide angle optical system as set forth in claim 1, wherein an angle incident to the first refractive surface is inclined at 30° or more.

5. The wide angle optical system as set forth in claim 1, wherein a refraction lens is further disposed in front of a first refractive surface of the prism lens.

6. The wide angle optical system as set forth in claim 1, wherein a refractive lens is further disposed between a second refractive surface of the prism lens and the image sensor.

7. The wide angle optical system as set forth in claim 1, wherein at least one optical surface of the prism lens is formed in an anamorphic surface or a free curved surface.

8. The wide angle optical system as set forth in claim 1, wherein the prism lens has a field of view of 90° vertically and 120° horizontally and Fno has a characteristic of 3.0.

9. The wide angle optical system as set forth in claim 1, wherein an iris is further disposed on the optical surface of the prism lens.

10. The wide angle optical system as set forth in claim 9, wherein the iris is disposed on a first reflecting surface or a second reflecting surface of the prism lens.

FIG.1

# FIG.2

# FIG.3

# FIG.4

|  | Europäisches Patentamt<br>European Patent Office<br>Office européen des brevets | **EUROPEAN SEARCH REPORT** | **Application Number**<br>EP 12 17 7490 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2010/007969 A1 (TOGINO)<br>14 January 2010 (2010-01-14) | 1-4,6-9 | INV.<br>G02B13/06<br>G02B17/08 |
| Y | * paragraphs [0091], [0102], [0103];<br>figure 1 * | 5 | |
| | ----- | | |
| X | US 2004/233555 A1 (MATSUNAGA)<br>25 November 2004 (2004-11-25) | 1,5 | |
| Y | * figure 1 * | 5 | |
| | ----- | | |
| X | EP 0 730 179 A2 (CANON KABUSHIKI KAISHA)<br>4 September 1996 (1996-09-04)<br>* paragraph [0195]; figure 9 *<br>----- | 1,9,10 | |
| | | | TECHNICAL FIELDS<br>SEARCHED (IPC)<br><br>G02B |

The present search report has been drawn up for all claims

| Place of search | Date of completion of the search | Examiner |
|---|---|---|
| The Hague | 23 October 2012 | Michel, Alain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 17 7490

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2012

| Patent document cited in search report | | Publication date | Patent family member(s) | | Publication date |
|---|---|---|---|---|---|
| US 2010007969 | A1 | 14-01-2010 | CN | 101573649 A | 04-11-2009 |
| | | | JP | 2008152073 A | 03-07-2008 |
| | | | US | 2010007969 A1 | 14-01-2010 |
| | | | WO | 2008075529 A1 | 26-06-2008 |
| US 2004233555 | A1 | 25-11-2004 | JP | 2004341411 A | 02-12-2004 |
| | | | US | 2004233555 A1 | 25-11-2004 |
| EP 0730179 | A2 | 04-09-1996 | DE | 69624021 D1 | 07-11-2002 |
| | | | DE | 69624021 T2 | 06-03-2003 |
| | | | EP | 0730179 A2 | 04-09-1996 |
| | | | US | 6021004 A | 01-02-2000 |
| | | | US | 6292309 B1 | 18-09-2001 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120056828
- KR 100786129